# EUROPEAN PATENT SPECIFICATION

(11) **EP 2 785 168 B1**
(45) Date of publication and mention of the grant of the patent: **19.05.2021**
(21) Application number: 11876408.3
(22) Date of filing: 01.12.2011
(51) Int. Cl.: A01D 34/00, G05D 1/02

(54) **A ROBOTIC GARDEN TOOL WITH PROTECTION FOR SENSOR**
ROBOTISCHES GARTENWERKZEUG MIT SCHUTZ FÜR EINEN SENSOR
OUTIL ROBOTISÉ DE JARDIN AVEC PROTECTION POUR CAPTEUR

(43) Date of publication of application: 08.10.2014
(73) Proprietor: HUSQVARNA AB, 561 82 Huskvarna (SE)
(72) Inventor: JÄGENSTEDT, Patrik, 560 27 Tenhult (SE); ÖHRLUND, Magnus, 570 21 Malmbäck (SE); ELONSSON, Martin, 561 92 Huskvarna (SE)
(86) International application number: PCT/SE2011/051463
(87) International publication number: WO 2013/081516

(56) References cited:
- EP-A1- 0 628 239
- EP-A1- 1 992 212
- DE-A1-102007 023 157
- GB-A- 2 295 304
- US-A- 2 331 144
- US-A- 2 331 144
- US-A- 3 570 227
- US-A- 4 133 404
- US-A- 4 133 404
- US-A- 4 545 453
- US-A1- 2004 221 790
- US-A1- 2008 039 974
- US-A1- 2008 039 974
- US-A1- 2008 282 658

## Description

### TECHNICAL FIELD

The present invention relates to a robotic garden tool used for lawn or garden maintenance. More particularly, the present invention relates to a robotic garden tool having one or more sensor units.

### BACKGROUND

Robotic garden tools, for example, but not limited to, robotic lawnmowers used for garden or lawn maintenance are well known in the art. It is desired for a robotic garden tool to navigate within boundaries of a working area. There are several ways which allow the robotic garden tool to detect the boundaries of the working area and perform operation within the same.

Typically boundary wires, for example, electric fences are used to demarcate the working area form one or more non-working areas within a garden. The non-working area may include fixed structure, for example, trees, ponds, pavements etc. The electric fences generate a reference signals and define a boundary for the working area. The reference signals, for example, but not limited to, magnetic field may be detected by the robotic garden tool, and assist in steering the robotic garden tool within working area. However, these systems have disadvantages of complicated installation, and increased cost associated with the wires and detection systems.

Another system used to navigate the robotic garden tool within the working area utilizes one or more sensor units to detect working condition in the proximity of the sensor units. For example, robotic lawnmowers provided with one or more optical sensor units are known in the art. The optical sensor units may detect various surface conditions based on light absorbance properties of the working area. The various surface conditions may include, for example, presence or absence of grass. The robotic garden tool may navigate within the working area based on the detected surface condition.

Further, to effectively detect the presence or absence of grass, the sensor unit is required to be installed in an area beneath a main body of the robotic garden tool, directly facing the surface. However, under the operating conditions of the robotic garden tool, it is particularly important to maintain these sensor units clean and free from dirt and/or debris, for example, but not limited to, small clippings/pieces of grass. Further, in case the clippings/pieces of grass substantially cover the sensor units, the robotic garden tool may detect erroneous surface conditions. This may necessitate regular cleaning and maintenance of the sensor units in the robotic garden tool.

US3570227 discloses a self-propelled lawnmower provided with sensing coils for detecting a boundary wire defining the work area of the self-propelled lawnmower GB2295304 A discloses a robotic garden tool according to the preamble of claim 1.

The European patent application published as EP 0628239 A1 discloses a grass cutting device suitable for automatic and unattended operation, comprises at least one drive wheel; a power unit operatively coupled to the drive wheel to propel the device; a cutter mechanism to cut grass over which the device passes and obstacle detection means capable of detecting an obstacle in the path of the device and being operably linked to the power unit to cause the device to retreat and turn away from the obstacle. The grass cutting device preferably further comprises mechanical long grass detection means arranged to detect long grass in the path of the device. In light of the foregoing, there is a need for an apparatus to effectively navigate a robotic garden tool within a predetermined boundary of a working area. Further, the apparatus should be reliable and require low maintenance.

### SUMMARY

In view of the above, it is an objective of the present invention to solve or at least reduce the problems discussed above. In particular, the objective is to provide an improved robotic garden tool which can reliably navigate within a working area.

The objective is achieved with a novel robotic garden tool according to claim 1. The robotic garden tool is adapted to perform an operation within a working area. The robotic garden tool includes a main body, a working element attached to the main body, and at least one sensor unit attached to the main body. Further, the sensor unit is configured to sense one or more conditions of the working area in the proximity of the sensor unit. Moreover, the sensor unit includes at least one sensor and a protective part is provided to partially enclose the sensor. Advantageously, during operation of the robotic garden tool, any debris from the working area may be not able to reach the sensor due to the protective part. Consequently, the sensor may remain substantially clean and accurately navigate the robotic garden tool.

According to claim 2, the protective part includes a first end and a second end, the sensor being located at the first end of the tube and a clearance is provided between the second end and the working area. According to claim 3, the protective part is configured to adjust the clearance between the second end and the working area. By adjusting the clearance and keep it as small as possible, the protective part significantly prevents debris from reaching to the sensor unit. Further, according to claims 4 and 5, the second end of the protective part includes an adjustable portion. The adjustable portion is composed of a flexible material such as rubber. During operation of the robotic garden tool, the flexible material conforms to the surface of the working area and keeps the clearance as small as possible. Moreover, according to claim 6, the first end and the second end of the protective part are telescopically arranged with respect to each other. Such a telescopic arrangement also allows the second end of the protective part to maintain the clearance as small as possible. Advantageously, according to claim 7, the protective part prevents the light emitted by any external sources from reaching the sensor.

Additionally, according to claim 8, the protective part is in the form of a circular, triangular or oval tube extending along a longitudinal axis. According to claim 9, the protective part is in the form of a funnel shaped tube extending along the longitudinal axis. Further, according to claim 10, the funnel shaped tube includes a tubular section and a conical section, the sensor being located within the tubular section and a clearance is provided between the conical section and the working area. Any dirt, debris or cut grass entered inside the funnel shaped tube sticks the inner surface of the conical section and avoids any blockage to the sensor unit. Further, according to claim 11, the funnel shaped tube is also configured to the clearance between the conical section and the working area.

According to claims 12 and 13, the conical section of the funnel shaped tube includes an adjustable portion. The adjustable portion is composed of a flexible material such as rubber. According to claim 14, the tubular section and the conical section of the protective part are telescopically arranged with respect to each other. As described above, by providing the adjustable portion or the telescopic arrangement the clearance between the conical section and the working area can be adjusted according to the surface of the working area.

According to claim 15, the protective part is in the form of a truncated conical shaped tube extending along the longitudinal axis. According to claim 16, the truncated conical shaped tube also includes a first end and a second end and wherein the at least one sensor is being located at the first end of the tube and a clearance is provided between the second end and the working area. According to claim 17, the truncated conical shaped tube is configured to adjust the clearance between the second end and the working area. According to claims 18 and 19, the second end of the truncated conical shaped tube includes an adjustable portion. The adjustable portion is composed of a flexible material such as rubber. Moreover, according to claim 20, the first end and the second end of the truncated conical shaped tube are telescopically arranged with respect to each other. As described above, by providing the adjustable portion or the telescopic arrangement the clearance between the second end and the working area can be adjusted according to the surface of the working area.

According to claim 21, the sensor unit includes an optical sensor. Further, according to claim 22, the optical sensor includes a light source configured to emit light and a receiving part configured to receive light reflected from the working area.

According to claim 23, the robotic garden tool system is a robotic lawnmower.

### BRIEF DESCRIPTION OF THE DRAWINGS

The invention will in the following be described in more detail with reference to the enclosed drawings, wherein:
**FIG. 1** illustrates a schematic diagram of a robotic garden tool, according to an embodiment of the present invention;
**FIG. 2A** illustrates a schematic diagram of a sensor unit, according to an embodiment of the present invention;
**FIG. 2B** illustrates a schematic diagram of a sensor unit, according to another embodiment of the present invention;
**FIG. 3A** illustrates a schematic diagram of a sensor unit, according to yet another embodiment of the present invention;
**FIG. 3B** illustrates a schematic diagram of a sensor unit, according to yet another embodiment of the present invention;
**FIG. 4A** illustrates a schematic diagram of a sensor unit, according to yet another embodiment of the present invention; and
**FIG. 4B** illustrates a schematic diagram of a sensor unit, according to yet another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention is limited to the appended claims. The following embodiments are provided so that this disclosure will be thorough and complete. For example, one or more aspects can be utilized in other embodiments and even other types of devices. In the drawings, like numbers refer to like elements.

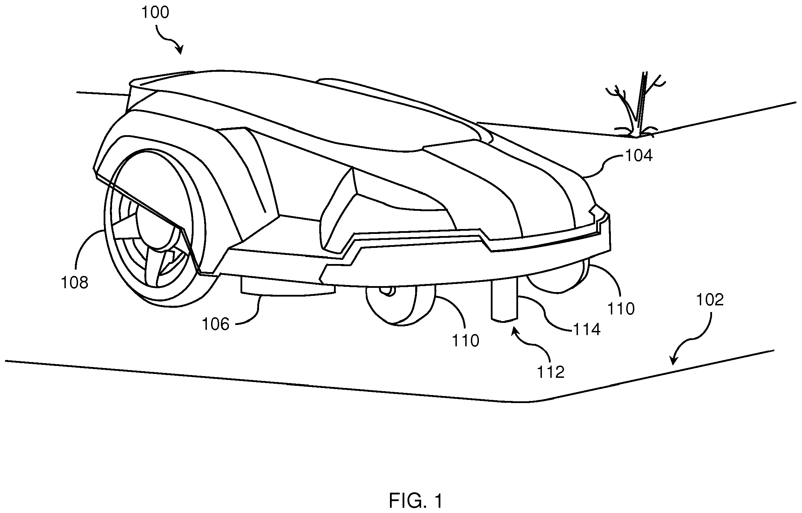

FIG. **1** illustrates a schematic diagram of a robotic garden tool **100** according to an embodiment of the present invention. In an embodiment of the present invention, a robotic garden tool **100** may be a robotic lawnmower configured to perform mowing and/or mulching operation within a working area **102.** However, the robotic garden tool **100** may be any other working vehicle, within the scope of the claims. The robotic garden **tool 100** may include a main body **104,** a working element **106** and a pair of drive wheels **108.** The robotic garden tool **100** may further include a pair of caster wheels **110** provided at the front portion to enable an easy movement and stability. The working element **106** is powered by a prime mower (not shown in the figures) and is used for cutting and/or mulching the grass and other vegetation present in the working area **102.** In an embodiment of the present invention, the working element **106** may be one or more metallic discs having a plurality of cutting blade attached at the periphery of the discs. In another embodiment of the present invention, the cutting element **106** may include one or more string type cutting filaments.

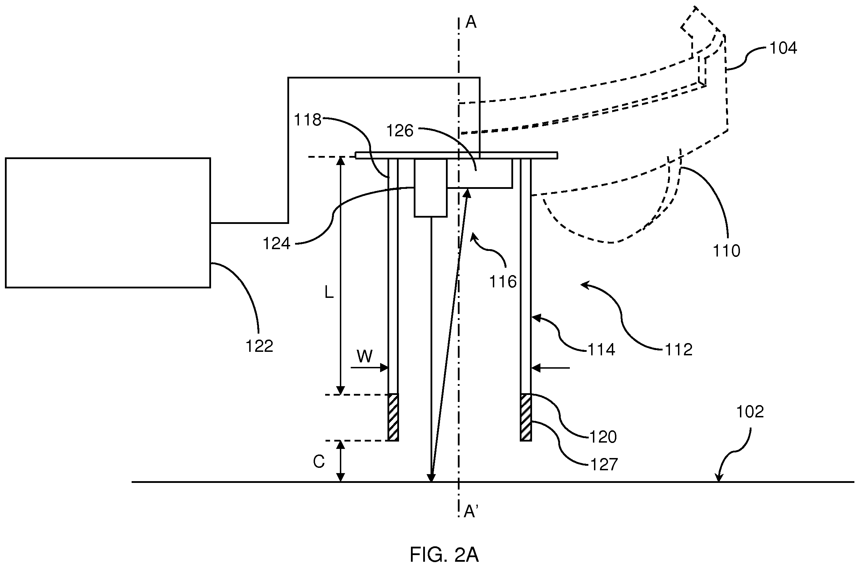

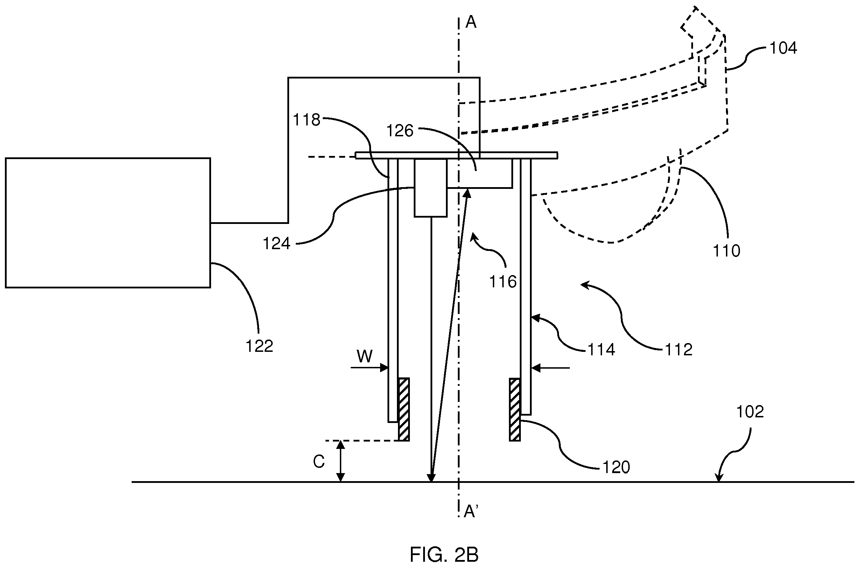

Typically, the working area **102** may include any terrain with vegetation, such as lawns, gardens, yards, golf courses, fields, or the like. The working area **102** may be defined by a boundary to demarcate from non-working areas for examples, but not limited to, water bodies, trees, stones and sand etc. However, the robotic garden tool **100** may include a sensor unit **112** to distinguish between non-working areas and the working area **102.** The sensor unit **112** is provided beneath the main body **104** of the robotic garden tool **100** and is configured sense one or more conditions of the working area 102 in the proximity of the sensor unit **112.** The sensor unit **112** may include one or more sensors, for example, but not limited to, optical sensors which are described in detail in conjunction with the FIGS. **2A** and **2B****.** The robotic garden tool **100** may include more than one sensor units which may be located beneath the main body **104** at front and/or rear parts of the robotic garden tool **100.** Further, the one or more conditions may include detection of various surface textures for water, stones, sand and grass. Based on the sensed conditions, the sensor unit **112** may provide an output signal to a control unit (not shown in the figures) to control the operation and navigation of the robotic garden tool **100.** According to the present invention, the sensor unit **112** may include a protective part **114** to partially cover the one or more sensors in a sensor unit **112.**

FIG. **2A** illustrates a schematic diagram of the sensor unit **112,** according to a embodiment of the present invention. As described above, the sensor unit **112** is located beneath the main body **104** of the robotic garden tool **100** and directly faces the working area **102.** The sensor unit **112** may include an optical sensor **116** enclosed within the protective part **114.** The protective part **114** may have a tube shape that extends along a longitudinal axis **AA'.** The tube shaped protective part **114** includes a first end **118** and a second end **120** such that the optical sensor **116** is located at the first end **118.** In an embodiment, the protective part **114** may be composed of plastic material and may be integrally formed with the main body of the robotic garden **tool 100.**

In an embodiment of the present invention, the optical sensor **116** may include a light source **124** and a receiving part **126.** The light source **124** may emit light, in the visible region or the infra red region, directed towards the working area **102.** A portion of the reflected light from the working surface **102** may be received by the receiving part **126.** Based on the sensed intensity of the reflected light, the absorbing properties of the working area **102** are determined. Further, a controller **122** is provided that may include stored reflected light intensity data for a variety of surface textures such that the sensed intensity is compared with the reflected light intensity data to determine the one or more surface conditions of the working area **102.** In another embodiment of the present invention, the light source **124** may not be present, and the receiving part **126** receives light directly emanated from the working surface **102.** Various other types of other sensors well known in the art, for example, but not limited to, acoustic sensors may also be used in the sensor unit **112** within the scope of the present claims. Moreover, the tube shaped protective part **114** may have a circular or oval cross-section and can hold one or more sensors similar to optical sensor **116.** Other cross-sections for example, but not limited to, square, triangular, rectangular, polygonal may be also be used without limiting the scope of the invention. However, a width **W** of the tube shaped protective part **114** is optimally selected to minimize the entry of debris or grass clippings and at the same time not effecting the working of the optical sensor **116.** The relation between L and W has to be made so that an approaching object, potentially disturbing the function of the sensor unit 112, will be prevented to hit the active area of the sensor unit 112, no matter what direction the object originate from

Further, in an embodiment of the present invention, the protective part **114** is configured to adjust a clearance **C** between the second end **120** and the working area **102.** As illustrated in FIG. **2A****,** an adjustable portion **127** is provided at the second end **120** of the protective part **112.** The adjustable portion **127** may conform to the uneven surface of the working area **102** to adjust the clearance **C** as small as possible. In an embodiment, the adjustable portion **127** may include a flexible material such as rubber. Advantageously, during operation of the robotic garden **tool 100,** any dirt and/or debris, for example, but not limited to, small clippings/pieces of grass may not be able to enter inside the tube shaped protective part **114.** Thus, the protective part **114** keeps the one or more sensors substantially clean and free from dirt and/or debris. Moreover, the protective part **114** may also prevent light emitted by an external source from reaching the sensor unit **112.** The relation between L, C and W has to be made so that an approaching object, potentially disturbing the function of the sensor unit 112, will be prevented to hit the active area of the sensor unit 112 no matter what direction the object originate from.

FIG. **2B** illustrates a schematic diagram of the sensor unit **112,** according to another embodiment of the present invention. As illustrated in FIG. **2B****,** the first end **118** and the second end **120** of the tube shaped protective part **114** are telescopically arranged with respect to each other. The telescopic arrangement of the first end **118** and the second end **120** may vary the clearance **C,** to keep it as small as possible, between the protective part **114** and working area **102** as per the surface of the working area **102.**

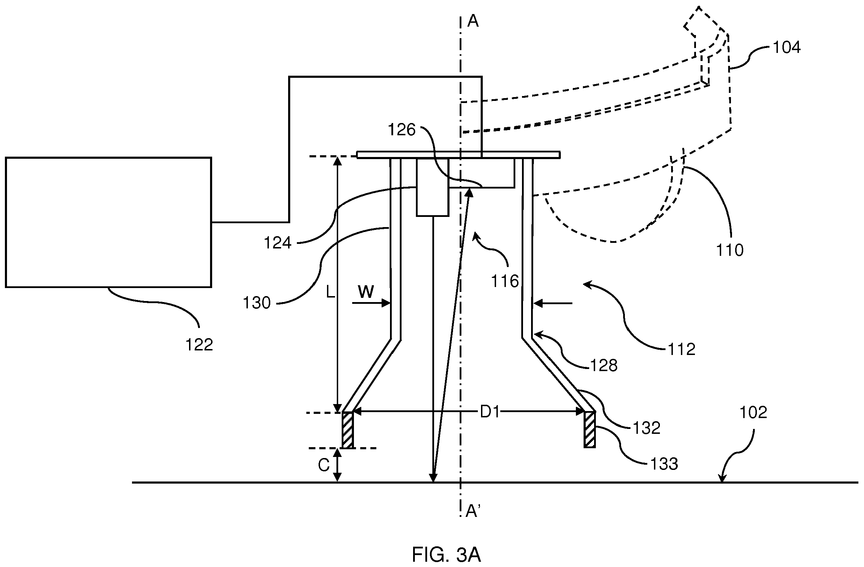

FIG. **3A** illustrates a schematic diagram of the sensor unit **112,** according to yet another embodiment of the present invention. The sensor unit **112** includes a protective part **128.** The protective part **128** is a funnel shaped tube extending along the longitudinal axis **AA'.** The funnel shaped tube **128** includes a tubular section **130** and a conical section **132.** The optical sensor **116** is located within the tubular section **130.** In case any debris or grass clippings enter the funnel shaped tube **128,** the debris and/or grass clippings may stick with the inner walls of the conical section **132.** Thus, the funnel shaped tube **128** still permits light from the working area **102** to easily reach the sensor unit **112.**

Further, in an embodiment of the present invention, the conical section **132** is provided with an adjustable portion **133.** The adjustable portion **133** may conform to the uneven surface of the working area **102** to achieve the clearance **C** as small as possible. As illustrated in FIG. **3A****,** the adjustable portion **133** is aligned parallel to the longitudinal axis **AA',** however in other embodiment, the adjustable portion **133** may be disposed at an angle with respect to the longitudinal axis **AA'** extending along the conical section **132.** As described above the adjustable portion **133** may be composed of rubber.The relation between L, C and W has to be made so that an approaching object, potentially disturbing the function of the sensor unit 112, will be prevented to hit the active area of the sensor unit 112, no matter what direction the object originate from.

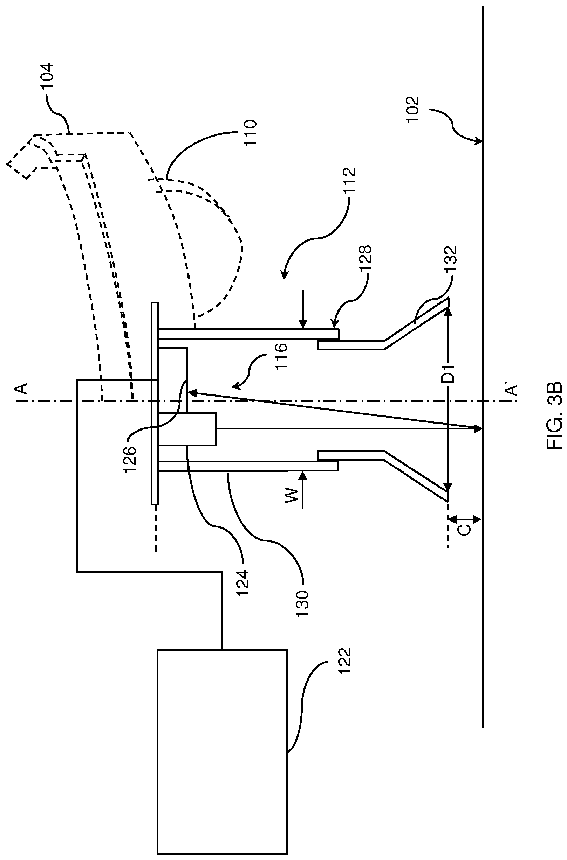

FIG. **3B** illustrates a schematic diagram of the sensor unit **112,** according to yet another embodiment of the present invention. As illustrated in FIG. **3B****,** the tubular section **130** and the conical section **132** of the protective part **128** are telescopically arranged with respect to each other. The telescopic arrangement of the tubular section **130** and the conical section **132** may vary the clearance C between the protective part **114** and working area **102** as per the surface of the working area **102.**

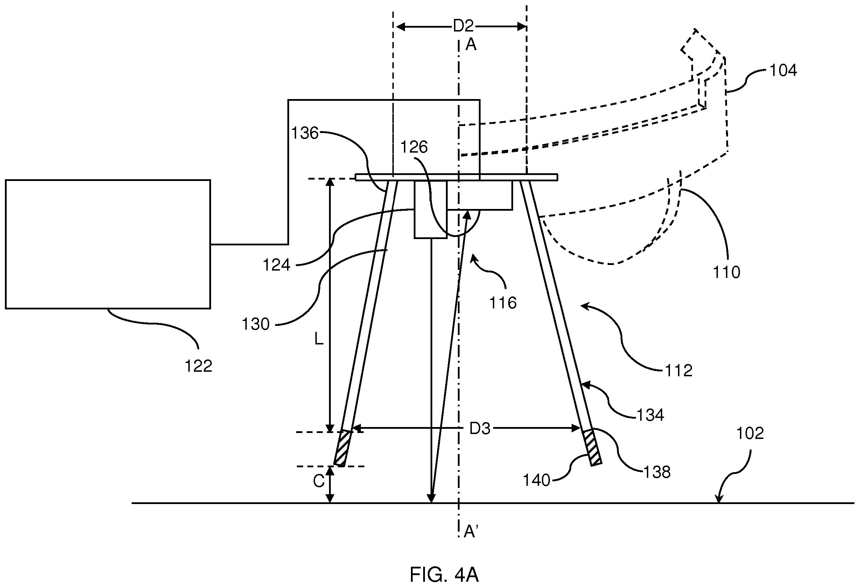

FIG. **4A** illustrates a schematic diagram of the sensor unit **112,** according to yet another embodiment of the present invention. The sensor unit **112** includes a protective part **134.** The protective part **134** is a truncated conical shaped tube extending along the longitudinal axis **AA'.** The truncated conical shaped tube **134** includes a first end **136** and a second end **138** such that the optical sensor **116** is located at the first end **136.** The optical sensor **116** is located within the truncated conical shaped tube **134.** The truncated conical shaped tube **134** permits light from the working area **102** to easily reach the sensor unit **112.** Further, in an embodiment of the present invention, the truncated conical shaped tube **134** is configured to adjust a clearance **C** between the second end **138** and the working area **102.** As illustrated in FIG. **4A****,** an adjustable portion **140** is provided at the second end **138** of the truncated conical shaped tube **134.** The adjustable portion **140** may conform to the uneven surface of the working area **102** to adjust the clearance **C** as small as possible. In an embodiment, the adjustable portion **140** may include a flexible material such as rubber.

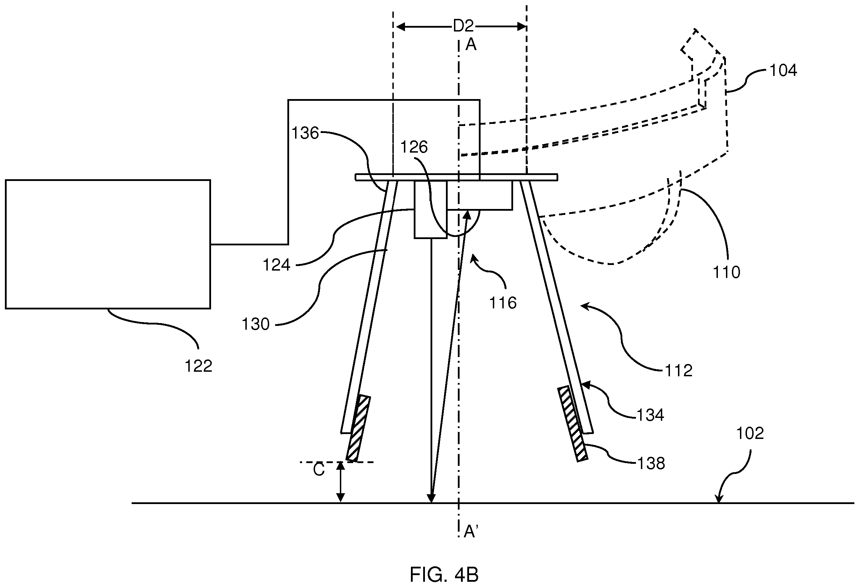

FIG. **4B** illustrates a schematic diagram of the sensor unit **112,** according to yet another embodiment of the present invention. As illustrated in FIG. **4B****,** the first end **136** and the second end **138** of the truncated conical shaped tube **134** are telescopically arranged with respect to each other. The telescopic arrangement of the first end **136** and the second end **138** may vary the clearance **C,** to keep it as small as possible, between truncated conical shaped tube **134** and working area **102** as per the surface of the working area **102.**

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A robotic garden tool **(100)** adapted to perform an operation within a working area **(102),** wherein the robotic garden tool **(100)** comprises:
a main body **(104);**
a working element **(106)** attached to the main body **(104);** and
at least one sensor unit **(112)** attached to the main body **(104),** the at least one sensor unit **(112)** being configured to sense one or more conditions of the working area **(102)** in the proximity of the at least one sensor unit **(112),**
the at least one sensor unit **(112)** being attached beneath the main body (104) and comprising at least one sensor **(116),** wherein the sensor unit (112) further comprises a protective part **(114, 128, 134)** to partially enclose the at least one sensor **(116), characterized in that** the protective part (114, 128, 134) is adapted to protect the at least one sensor (116) from cut grass, dirt and other debris..

2. A robotic garden tool **(100)** according to claim 1, wherein protective part **(114)** comprises a first end **(118)** and a second end **(120),** and wherein the at least one sensor **(116)** being located at the first end **(118)** of the protective part **(114)** and a clearance **(C)** is provided between the second end **(120)** and the working area **(102).**

3. A robotic garden tool **(100)** according to claim 2, wherein the protective part **(114)** is configured to adjust the clearance **(C).**

4. A robotic garden tool **(100)** according to claim 3 comprises an adjustable portion **(127)** provided at the second end **(120)** of the protective part **(114).**

5. A robotic garden tool **(100)** according to claim 4, wherein the adjustable portion **(127)** comprises a flexible material.

6. A robotic garden tool **(100)** according to claim 3, wherein the first end **(118)** and the second end **(120)** are telescopically arranged with respect to each other.

7. A robotic garden tool **(100)** according to claim 1, wherein the protective part **(114, 128, 134)** at least partially prevents light emitted by an external source from reaching the at least one sensor **(116).**

8. A robotic garden tool **(100)** according to claim 1, wherein the protective part **(114, 128, 134)** is in the form of a circular, triangular, or oval tube extending along a longitudinal axis **(AA').**

9. A robotic garden tool **(100)** according to claim 1, wherein the protective part **(128)** is in the form of a funnel shaped tube **(128)** extending along a longitudinal axis **(AA').**

10. A robotic garden tool **(100)** according to claim 9, wherein the funnel shaped tube **(128)** comprises a tubular section **(130)** and a conical section **(132),** and wherein the at least one sensor **(116)** being located within the tubular section **(130)** and a clearance **(C)** is provided between the conical section **(132)** and the working area **(102).**

11. A robotic garden tool **(100)** according to claim 10, wherein the funnel shaped tube **(128)** is configured to adjust the clearance **(C).**

12. A robotic garden tool **(100)** according to claim 11 comprises an adjustable portion **(133)** provided at the conical section **(132)** of the funnel shaped tube **(128).**

13. A robotic garden tool **(100)** according to claim 12, wherein the adjustable portion **(133)** comprises a flexible material.

14. A robotic garden tool **(100)** according to claim 13, wherein the tubular section **(130)** and the conical section **(132)** are telescopically arranged with respect to each other.

15. A robotic garden tool **(100)** according to claim 1, wherein the protective part **(134)** is in the form of a truncated conical shaped tube **(134)** extending along a longitudinal axis **(AA').**

16. A robotic garden tool **(100)** according to claim 15, wherein the truncated conical shaped tube **(134)** comprises a first end **(136)** and a second end **(138),** and wherein the at least one sensor **(116)** being located at the first end **(136)** of the tube **(134)** and a clearance **(C)** is provided between the second end **(138)** and the working area **(102).**

17. A robotic garden tool **(100)** according to claim 16, wherein truncated conical shaped tube **(134)** is configured to adjust the clearance **(C).**

18. A robotic garden tool **(100)** according to claim 17 comprises an adjustable portion **(140)** provided at the second end **(138)** of truncated conical shaped tube **(134).**

19. A robotic garden tool **(100)** according to claim 18, wherein the adjustable portion **(140)** comprises a flexible material.

20. A robotic garden tool **(100)** according to claim 17, wherein the first end **(136)** and the second end **(138)** are telescopically arranged with respect to each other.

21. A robotic garden tool **(100)** according to any of the preceding claims, wherein the at least one sensor unit **(112)** comprises an optical sensor **(116).**

22. A robotic garden tool **(100)** according to claim 21, wherein the optical sensor **(116)** comprises a light source **(124)** configured to emit light and a receiving part **(126)** configured to receive light reflected from the working area **(102).**

23. A robotic garden tool **(100)** according to any of the preceding claims is a robotic lawnmower.

## Patentansprüche

1. Robotisches Gartenwerkzeug (100), das angepasst ist, um einen Vorgang innerhalb eines Arbeitsbereichs (102) durchzuführen, wobei das robotische Gartenwerkzeug (100) Folgendes umfasst:
einen Hauptkörper (104);
ein Arbeitselement (106), das an dem Hauptkörper (104) befestigt ist; und
mindestens eine Sensoreinheit (112), die an dem Hauptkörper (104) befestigt ist, wobei die mindestens eine Sensoreinheit (112) konfiguriert ist, um eine oder mehrere Bedingungen des Arbeitsbereichs (102) in der Nähe der mindestens einen Sensoreinheit (112) zu erfassen,
wobei die mindestens eine Sensoreinheit (112) unterhalb des Hauptkörpers (104) befestigt ist und mindestens einen Sensor (116) umfasst, wobei die Sensoreinheit (112) ferner ein Schutzteil (114, 128, 134) umfasst, um den mindestens einen Sensor (116) teilweise zu umschließen,
**dadurch gekennzeichnet, dass** das Schutzteil (114, 128, 134) angepasst ist, um den mindestens einen Sensor (116) vor geschnittenem Gras, Schmutz und anderen Verunreinigungen zu schützen.

2. Robotisches Gartenwerkzeug (100) nach Anspruch 1, wobei das Schutzteil (114) ein erstes Ende (118) und ein zweites Ende (120) umfasst und wobei der mindestens eine Sensor (116) an dem ersten Ende (118) des Schutzteils (114) angeordnet ist und ein Freiraum (C) zwischen dem zweiten Ende (120) und dem Arbeitsbereich (102) vorgesehen ist.

3. Robotisches Gartenwerkzeug (100) nach Anspruch 2, wobei das Schutzteil (114) konfiguriert ist, um den Freiraum (C) anzupassen.

4. Robotisches Gartenwerkzeug (100) nach Anspruch 3, umfassend einen anpassbaren Abschnitt (127), der an dem zweiten Ende (120) des Schutzteils (114) vorgesehen ist.

5. Robotisches Gartenwerkzeug (100) nach Anspruch 4, wobei der anpassbare Abschnitt (127) ein flexibles Material umfasst.

6. Robotisches Gartenwerkzeug (100) nach Anspruch 3, wobei das erste Ende (118) und das zweite Ende (120) teleskopartig in Bezug zueinander angeordnet sind.

7. Robotisches Gartenwerkzeug (100) nach Anspruch 1, wobei das Schutzteil (114, 128, 134) zumindest teilweise verhindert, dass von einer externen Quelle emittiertes Licht den mindestens einen Sensor (116) erreicht.

8. Robotisches Gartenwerkzeug (100) nach Anspruch 1, wobei das Schutzteil (114, 128, 134) in Form eines kreisförmigen, dreieckigen oder ovalen Rohrs vorliegt, das sich entlang einer Längsachse (AA') erstreckt.

9. Robotisches Gartenwerkzeug (100) nach Anspruch 1, wobei das Schutzteil (128) in Form eines trichterförmigen Rohrs (128) vorliegt, das sich entlang einer Längsachse (AA') erstreckt.

10. Robotisches Gartenwerkzeug (100) nach Anspruch 9, wobei das trichterförmige Rohr (128) einen rohrförmigen Abschnitt (130) und einen konischen Abschnitt (132) umfasst und wobei der mindestens eine Sensor (116) innerhalb des rohrförmigen Abschnitts (130) angeordnet ist und zwischen dem konischen Abschnitt (132) und dem Arbeitsbereich (102) ein Freiraum (C) vorgesehen ist.

11. Robotisches Gartenwerkzeug (100) nach Anspruch 10, wobei das trichterförmige Rohr (128) konfiguriert ist, um den Freiraum (C) anzupassen.

12. Robotisches Gartenwerkzeug (100) nach Anspruch 11, umfassend einen anpassbaren Abschnitt (133), der an dem konischen Abschnitt (132) des trichterförmigen Rohrs (128) vorgesehen ist.

13. Robotisches Gartenwerkzeug (100) nach Anspruch 12, wobei der anpassbare Abschnitt (133) ein flexibles Material umfasst.

14. Robotisches Gartenwerkzeug (100) nach Anspruch 13, wobei der rohrförmige Abschnitt (130) und der konische Abschnitt (132) teleskopartig in Bezug zueinander angeordnet sind.

15. Robotisches Gartenwerkzeug (100) nach Anspruch 1, wobei das Schutzteil (134) in Form eines kegelstumpfförmigen Rohrs (134) vorliegt, das sich entlang einer Längsachse (AA') erstreckt.

16. Robotisches Gartenwerkzeug (100) nach Anspruch 15, wobei das kegelstumpfförmige Rohr (134) ein erstes Ende (136) und ein zweites Ende (138) umfasst und wobei der mindestens eine Sensor (116) an dem ersten Ende (136) des Rohrs (134) angeordnet ist und ein Freiraum (C) zwischen dem zweiten Ende (138) und dem Arbeitsbereich (102) vorgesehen ist.

17. Robotisches Gartenwerkzeug (100) nach Anspruch 16, wobei das kegelstumpfförmige Rohr (134) konfiguriert ist, um den Freiraum (C) anzupassen.

18. Robotisches Gartenwerkzeug (100) nach Anspruch 17, umfassend einen anpassbaren Abschnitt (140), der an dem zweiten Ende (138) des kegelstumpfförmigen Rohrs (134) vorgesehen ist.

19. Robotisches Gartenwerkzeug (100) nach Anspruch 18, wobei der anpassbare Abschnitt (140) ein flexibles Material umfasst.

20. Robotisches Gartenwerkzeug (100) nach Anspruch 17, wobei das erste Ende (136) und das zweite Ende (138) teleskopartig in Bezug zueinander angeordnet sind.

21. Robotisches Gartenwerkzeug (100) nach einem der vorstehenden Ansprüche, wobei die mindestens eine Sensoreinheit (112) einen optischen Sensor (116) umfasst.

22. Robotisches Gartenwerkzeug (100) nach Anspruch 21, wobei der optische Sensor (116) eine Lichtquelle (124), die konfiguriert ist, um Licht zu emittieren, und ein Empfangsteil (126), das konfiguriert ist, um von dem Arbeitsbereich (102) reflektiertes Licht zu empfangen, umfasst.

23. Robotisches Gartenwerkzeug (100) nach einem der vorstehenden Ansprüche ist ein robotischer Rasenmäher.

## Revendications

1. Outil de jardin robotisé (100) adapté pour effectuer une opération dans une zone de travail (102), dans lequel l'outil de jardin robotisé (100) comprend :
un corps principal (104) ;
un élément de travail (106) fixé au corps principal (104) ; et
au moins une unité de capteur (112) fixée au corps principal (104), l'au moins une unité de capteur (112) étant configurée pour détecter une ou plusieurs conditions de la zone de travail (102) à proximité de l'au moins une unité de capteur (112),
l'au moins une unité de capteur (112) étant fixée sous le corps principal (104) et comprenant au moins un capteur (116), dans lequel l'unité de capteur (112) comprend en outre une partie de protection (114, 128 , 134) pour enfermer partiellement l'au moins un capteur (116), **caractérisé en ce que** la partie de protection (114, 128, 134) est adaptée pour protéger l'au moins un capteur (116) de l'herbe coupée, de la boue et d'autres débris.

2. Outil de jardin robotisé (100) selon la revendication 1, dans lequel la partie de protection (114) comprend une première extrémité (118) et une seconde extrémité (120), et dans lequel l'au moins un capteur (116) est situé au niveau de la première extrémité (118) de la partie de protection (114) et un jeu (C) est prévu entre la seconde extrémité (120) et la zone de travail (102).

3. Outil de jardin robotisé (100) selon la revendication 2, dans lequel la partie de protection (114) est configurée pour régler le jeu (C).

4. Outil de jardin robotisé (100) selon la revendication 3, comprenant une partie réglable (127) prévue au niveau de la seconde extrémité (120) de la partie de protection (114).

5. Outil de jardin robotisé (100) selon la revendication 4, dans lequel la partie réglable (127) comprend un matériau flexible.

6. Outil de jardin robotisé (100) selon la revendication 3, dans lequel la première extrémité (118) et la seconde extrémité (120) sont disposées de manière télescopique l'une par rapport à l'autre.

7. Outil de jardin robotisé (100) selon la revendication 1, dans lequel la partie de protection (114, 128, 134) empêche au moins partiellement la lumière émise par une source externe d'atteindre l'au moins un capteur (116).

8. Outil de jardin robotisé (100) selon la revendication 1, dans lequel la partie de protection (114, 128, 134) se présente sous la forme d'un tube circulaire, triangulaire ou ovale s'étendant le long d'un axe longitudinal (AA').

9. Outil de jardin robotisé (100) selon la revendication 1, dans lequel la partie de protection (128) se présente sous la forme d'un tube en forme d'entonnoir (128) s'étendant le long d'un axe longitudinal (AA').

10. Outil de jardin robotisé (100) selon la revendication 9, dans lequel le tube en forme d'entonnoir (128) comprend une section tubulaire (130) et une section conique (132), et dans lequel l'au moins un capteur (116) est situé à l'intérieur de la section tubulaire (130) et un jeu (C) est prévu entre la section conique (132) et la zone de travail (102).

11. Outil de jardin robotisé (100) selon la revendication 10, dans lequel le tube en forme d'entonnoir (128) est configuré pour régler le jeu (C).

12. Outil de jardin robotisé (100) selon la revendication 11 comprenant une partie réglable (133) prévue au niveau de la section conique (132) du tube en forme d'entonnoir (128).

13. Outil de jardin robotisé (100) selon la revendication 12, dans lequel la partie réglable (133) comprend un matériau flexible.

14. Outil de jardin robotisé (100) selon la revendication 13, dans lequel la section tubulaire (130) et la section conique (132) sont disposées de manière télescopique l'une par rapport à l'autre.

15. Outil de jardin robotisé (100) selon la revendication 1, dans lequel la partie de protection (134) se présente sous la forme d'un tube de forme tronconique (134) s'étendant le long d'un axe longitudinal (AA').

16. Outil de jardin robotisé (100) selon la revendication 15, dans lequel le tube de forme tronconique (134) comprend une première extrémité (136) et une seconde extrémité (138), et dans lequel l'au moins un capteur (116) est situé au niveau de la première extrémité (136) du tube (134) et un jeu (C) est prévu entre la seconde extrémité (138) et la zone de travail (102).

17. Outil de jardin robotisé (100) selon la revendication 16, dans lequel un tube de forme tronconique (134) est configuré pour ajuster le jeu (C).

18. Outil de jardin robotisé (100) selon la revendication 17, comprenant une partie réglable (140) prévue au niveau de la seconde extrémité (138) d'un tube de forme tronconique (134).

19. Outil de jardin robotisé (100) selon la revendication 18, dans lequel la partie réglable (140) comprend un matériau flexible.

20. Outil de jardin robotisé (100) selon la revendication 17, dans lequel la première extrémité (136) et la seconde extrémité (138) sont agencées de manière télescopique l'une par rapport à l'autre.

21. Outil de jardin robotisé (100) selon l'une quelconque des revendications précédentes, dans lequel l'au moins une unité de capteur (112) comprend un capteur optique (116).

22. Outil de jardin robotisé (100) selon la revendication 21, dans lequel le capteur optique (116) comprend une source de lumière (124) configurée pour émettre de la lumière et une partie réceptrice (126) configurée pour recevoir la lumière réfléchie par la zone de travail (102).

23. Outil de jardin robotisé (100) selon l'une quelconque des revendications précédentes qui est une tondeuse à gazon robotisée.
